**Europäisches Patentamt**

**European Patent Office**

**Office européen des brevets**

(19)

(11) Veröffentlichungsnummer : **0 359 971 B1**

(12) **EUROPÄISCHE PATENTSCHRIFT**

(45) Veröffentlichungstag der Patentschrift :
**26.02.92 Patentblatt 92/09**

(51) Int. Cl.$^5$ : **B29C 49/00, B29C 69/00**

(21) Anmeldenummer : **89114649.0**

(22) Anmeldetag : **08.08.89**

(54) Verfahren zur Herstellung von hohlen Behältern aus Kunststoff.

(30) Priorität : **21.09.88 DE 3831957**

(43) Veröffentlichungstag der Anmeldung :
**28.03.90 Patentblatt 90/13**

(45) Bekanntmachung des Hinweises auf die
Patenterteilung :
**26.02.92 Patentblatt 92/09**

(84) Benannte Vertragsstaaten :
**ES FR GB IT SE**

(56) Entgegenhaltungen :
**FR-A- 508 591**
**FR-A- 1 134 426**

(56) Entgegenhaltungen :
**GB-A- 1 465 564**
**GB-A- 1 487 440**
**US-A- 2 991 500**
**US-A- 3 583 036**

(73) Patentinhaber : **Hansen, Bernd, Dipl.-Ing.**
**Heerstrasse 16**
**W-7166 Sulzbach-Laufen 2 (DE)**

(72) Erfinder : **Hansen, Bernd, Dipl.-Ing.**
**Heerstrasse 16**
**W-7166 Sulzbach-Laufen 2 (DE)**

(74) Vertreter : **Patentanwälte Phys. Bartels**
**Dipl.-Ing. Fink Dr.-Ing. Held**
**Lange Strasse 51**
**W-7000 Stuttgart 1 (DE)**

**Beschreibung**

Die Erfindung betrifft ein Verfahren zur Herstellung von hohlen Behältern aus Kunststoff, das die Merkmale des Oberbegriffes des Patentanspruches 1 aufweist.

Bei einem bekannten Verfahren zur Herstellung von hohlen Behälten aus Kunststoff wird ein Schlauch im Bereich der Randzone zum Zwecke der Kühlung so stark wie möglich zusammengepreßt, wobei es zu einer Verschweißung der hier aufeinanderliegenden beiden Lagen kommt. Um die hierfür erforderlichen Schließkräfte des Werkzeuges, in dem die Formung des Behälters oder der Behälter und das Pressen der Randzone erfolgt, zu reduzierten, wurde bereits vorgeschlagen, beim Zusammenpressen der Randzone in dieser im Abstand nebeneinander verlaufende Rippen zu bilden, indem man die in Anlage an die Randzone kommenden Flächen des Werkzeuges mit entsprechenden Rinnen versieht.

Bei einem bekannten Verfahren der eingangs genannten Art (US-A-3 583 036) wird in einem Werkzeug, das zwei Formhälften aufweist, aus zwei Folien ein Hohlkörper im Blasverfahren geformt und gleichzeitig in der diesen Behälter in der Teilungsebene umgebenden Randzone ein schlauchförmiger Hohlkörper gebildet, der außerhalb der Schweißnaht des Behälters liegt und einen den Behälter umgebenden Rahmen bildet. Dieser schlauchförmige Hohlkörper hat die Aufgabe, den Kühlvorgang der Schweißzone des Behälters zu beschleunigen, damit der Behälter von der Randzone möglichst frühzeitig getrennt werden kann. Zwar können derartige Werkzeuge nebeneinander angeordnet werden, um gleichzeitig zwei oder mehr Behälter herstellen zu können. Wegen der Hohlkörper wird dabei aber der Abstand zwischen benachbarten Behältern sehr groß. Außerdem wird das Entnehmen der Behälter aus den Werkzeugen dadurch, daß mehrere Behälter zusammenhängen, wesentlich erschwert.

Der Erfindung liegt die Aufgabe zugrunde, ein Verfahren der eingangs genannten Art dahingehend zu verbessern, daß es sich auch für die gleichzeitige Herstellung mehrerer, nebeneinander zu einem Block angeordneter Behälter eignet.

Dadurch daß der aus dem Hohlkörper oder mehreren Hohlkörpern geformte Rahmen den aus den Behältern gebildeten Block umgibt, läßt sich nicht nur eine relativ niedrige Schließkraft für das Formwerkzeug erreichen. Von besonderer Bedeutung ist auch, daß sich eine wesentliche Reduzierung der Zykluszeit erreichen läßt, was zum einen auf die verbesserte Abfuhr des Wärme aus der Randzone zurückzuführen ist, zum anderen darauf, daß die Randzone dank des Hohlkörpers oder der Hohlkörper eine wesentlich höhere Stabilität erhält und deshalb den Behälter oder die Behälter sicher zu halten vermag, selbst wenn diese noch nicht vollständig abgekühlt und/oder zuvor gefüllt worden sind. Die Hohe Stabilität der Randzone stellt daher sicher, daß der Behälter oder die Behälter problemlos aus der Form entnommen werden können, wodurch der gesamte Herstellungsprozeß auch eine erhöhte Sicherheit erhält.

Das Formen des Hohlkörpers oder der Hohlkörper erfolgt vorteilhafterweise mit Hilfe eines Unterdrucks, der in den zur Bildung jedes Hohlkörpers vorgesehenen Vertiefungen des Werkzeuges wirksam ist und dadurch bewirkt, daß sich das Ausgangsmaterial auch im Bereich der Randzone an die Wandung der zugehörigen Ausnehmungen anlegt. In dem den Behälter oder die Behälter bildenden Abschnitt erfolgt die Formung vorzugsweise durch Blasen.

Form und Größe des Hohlkörpers oder der Hohlkörper können an die Erfordernisse angepaßt werden. Es ist deshalb in der Regel vorteilhaft, Hohlkörper unterschiedlicher Form und/oder Größe zu formen.

Werden gleichzeitig mehrere nebeneinander angeordnete, flaschenförmige Behälter, beispielsweise Ampullen, hergestellt, die einen gegenüber ihrem Körper verjüngten Hals- und/oder Kopfteil haben, dann kann auch aus dem Bereich zwischen zwei benachbarten Hals- und/oder Kopfteilen wenigstens ein Hohlkörper geformt werden.

Um die Zykluszeit durch die Formung des Hohlkörpers oder der Hohlkörper nicht zu erhöhen, erfolgt die Formung und Verschweißung jedes Hohlkörpers zweckmäßigerweise gleichzeitig mit der Formung bzw. Verschweißung des Behälters oder der Behälter.

Selbstverständlich kann jeder hergestellte Behälter nach dem Verschweißen seiner beiden Hälften gefüllt und in einem zweiten Schweißvorgang verschlossen werden.

Im folgenden ist die Erfindung anhand eines Ausführungsbeispiels erläutert. Es zeigen

Fig. 1 eine unvollständig dargestellte Ansicht eines nach dem erfindungsgemäßen Verfahren hergestellten Ampullenblockes und seiner Randzone,

Fig. 2 eine unvollständig dargestellte Ansicht der Innenseite der einen Formschale des Formwerkzeuges zur Herstellung eines Ampullenblocks gemäß Fig. 1,

Fig. 3 eine unvollständig dargestellte Ansicht der Innenseite der einen Kopfbacke des Formwerkzeuges

Fig. 4 einen Schnitt nach der Linie IV-IV der Fig. 2,

Fig. 5 einen vergrößert dargestellten Schnitt nach Linie IV-IV der Fig. 3.

Zwischen die beiden gegeneinander bewgbaren Hälften eines Formwerkzeuges, das aus einer linken Formschale, einer korrespondierend ausgebildeten rechten Formschale, einer sich an das obere Ende der linken Formschale 1 anschließenden linken Kopfbacke 2 und einer zu dieser korrespondierend ausgebildeten rechten Kopfbacke besteht, wird ein Kunststoffschlauch eingeführt, dessen Abmessungen so gewählt sind, daß bei der durch Blasen oder durch Vakuum erfolgenden Formung des aus mehreren gleich ausgebildeten und nebeneinander liegenden Ampullen 3 gebildeten Ampullenblockes eine diesen Block umgebende Abfallrandzone 4 entsteht.

Beim Zusammenfahren der beiden Formschalen legt sich die Wandung des Kunststoffschlauches an die zur Bildung der Ampullenkörper in den Formschalen vorgesehenen Vertiefungen 5 an, da mittels je eines Blasdornes sterile Luft in jeden entstehenden Ampullenkörper eingeleitet wird. Außerdem werden nach der Formung der Ampullen 3 die sie bildenden beiden Hälften miteinander verschweißt.

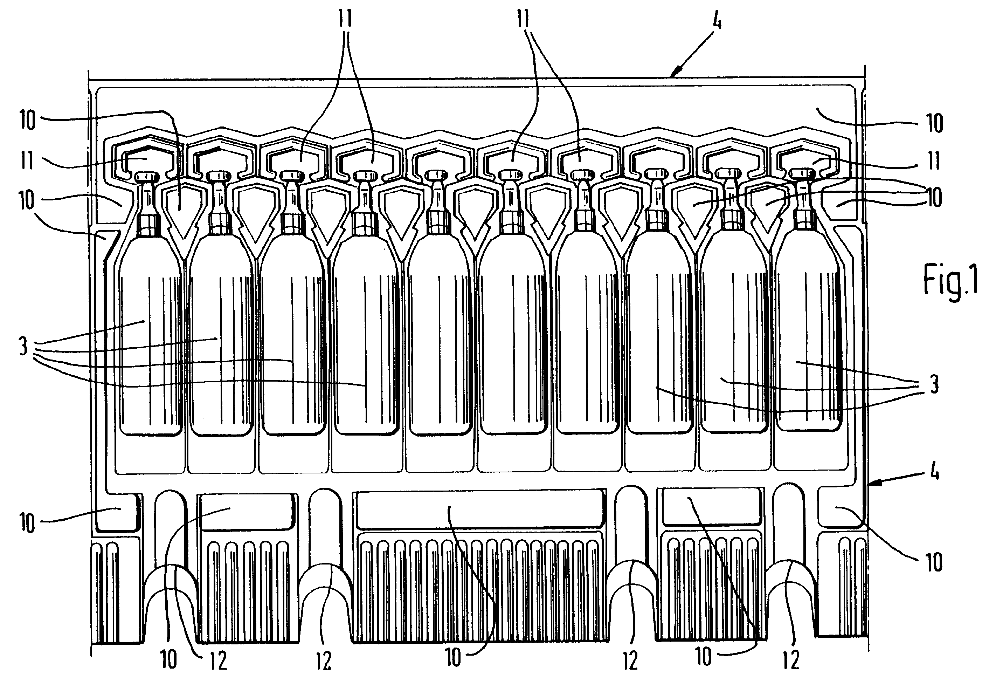

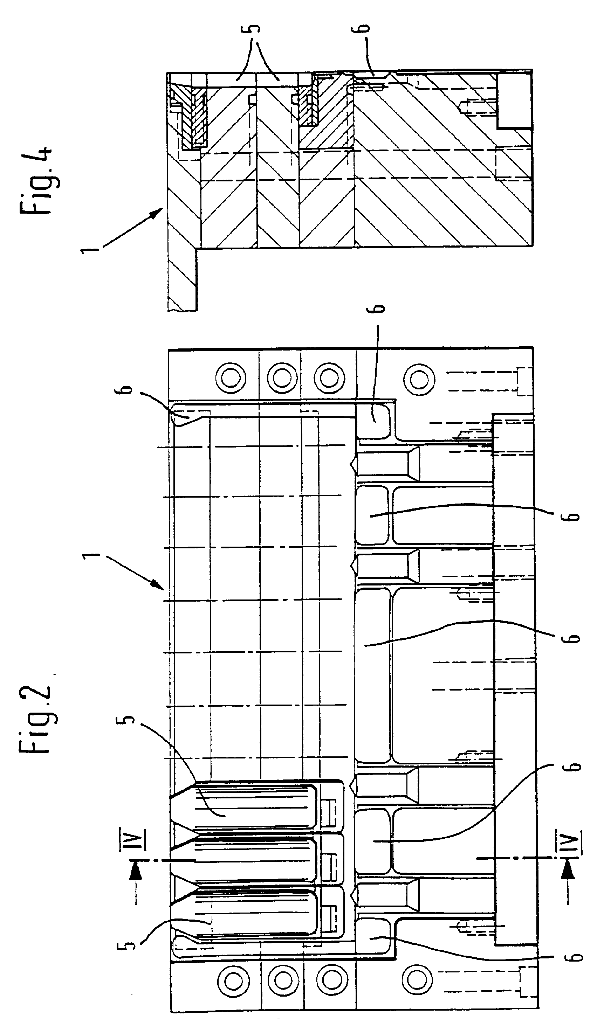

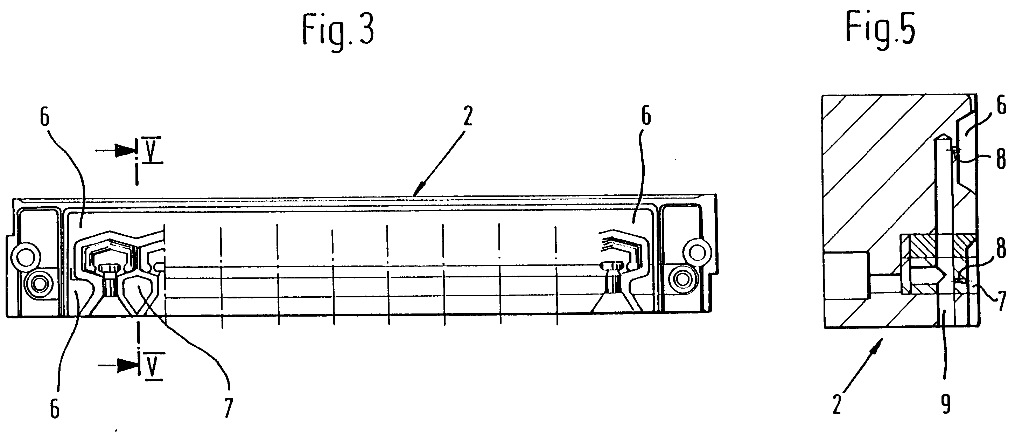

Wie die Fig. 2 bis 5 zeigen, sind die beiden Formschalen sowie die beiden Kopfbacken in dem die Abfallrandzonen 4 bildenden Bereich mit Veriefungen 6 unterschiedlicher Form und Größe versehen. Je eine Vertiefung 7 ist außerdem in dem zwischen den Halsteil und seiner benachbarter Ampullen 3 liegenden Abschnitt vorgesehen. In die Vertiefungen 6 und 7 mündet, wie Fig. 5 zeigt, je einen Kanal 8, der über einen Sammelkanal 9 mit einer Unterdruckquelle verbindbar ist. Beim Schließen der Formschalen und der Kopfbacken werden nicht nur die Ampullen 3 gebildet. Mit Hilfe der Vertiefungen 6 und 7 werden auch Hohlkörper 10 geformt. Diese Formung sowie die anschließende Verschweißung ihrer beiden Hälften erfolgt gleichzeitig mit der Formung der Ampullen 3 und der Verschweißung von deren beiden Hälften. Wie Fig. 1 zeigt, bilden die Hohlkörper 10 einen den Ampullenblock umgebenden Rahmen, der Dank der Hohlkörper 10 eine hohe Stabilität hat.

Im Ausführungsbeispiel werden die Ampullen 3, ehe sie das Formwerkzeug verlassen, gefüllt und anschließend mit Hilfe der unabhängig von den Formschalen verschiebbaren Kopfbacken unter gleichzeitiger Bildung eines das Öffnen erleichternden Knebels 11 verschlossen.

Mit Hilfe von Stiften, welche in Sacklöcher 12 der Abfallrandzone 4 eingreifen, wird das aus dem Ampullenblock und der ihn umgebenden Abfallrandzone 4 gebildete Formteil aus dem Werkzeug entnommen, wobei Dank der hohen Stabilität der Abfallrandzone 4 die Entnahme auch dann sicher und problemlos möglich ist, wenn die Ampullen 3 noch nicht vollständig abgekühlt und/oder gefüllt sind.

Alle in der vorstehenden Beschreibung erwähnten sowie auch die aus der Zeichnung entnehmbaren Merkmale sind als weitere Ausgestaltungen Bestandteile der Erfindung.

## Patentansprüche

1. Verfahren zur Herstellung von hohlen Behältern aus Kunststoff, bei dem
a) für jeden Behälter (3) in einem Werkzeug zwei Hälften geformt und miteinander verschweißt werden,
b) aus einer Abfallrandzone (4) wenigstens ein rahmenförmiger Hohlkörper (10) in gleicher Weise wie der Behälter geformt und verschweißt wird,
dadurch gekennzeichnet, daß in ein und demselben Werkzeug aus einem Schlauch oder zwei Bereichen desselben mehrere nebeneinander angeordnete Behälter (3) gleichzeitig hergestellt werden und daß der aus dem Hohlkörper oder mehreren Hohlkörpern (10) geformte Rahmen den aus den Behältern (3) gebildeten Block umgibt.

2. Verfahren nach Anspruch 1, dadurch gekennzeichnet, daß die Hohlkörper (10) mit unterschiedlichen geometrischen Formen und/oder unterschiedlicher Größe geformt werden.

3. Verfahren nach Anspruch 1 oder 2, dadurch gekennzeichnet, daß nebeneinander angeordneter Behälter (3) flaschenförmige mit gegenüber ihrem Körper verjüngtem Hals- und/oder Kopfteil ausgebildet werden und der zwischen zwei benachbarten Hals- und/oder Kopfteilen vorhandene Bereich zu wenigstens einem Hohlkörper (10) geformt wird.

4. Verfahren nach einem der Ansprüche 1 bis 3, dadurch gekennzeichnet, daß die Formung jedes vorgesehenen Hohlkörpers (10) und die Verschweißung der beiden ihn bildenden Abschnitte des Ausgangsmaterials gleichzeitig mit der Formung bzw. der Verschweißung des Behälters (3) oder der Behälter (3) erfolgt.

5. Verfahren nach einem der Ansprüche 1 bis 4, dadurch gekennzeichnet, daß jeder hergestellte Behälter (3) nach dem Verschweißen seiner beiden Hälften gefüllt und in einem zweiten Schweißvorgang verschlossen wird.

## Claims

1. Method for the production of hollow containers from synthetic material, in which
a) for each container (3), two halves are formed and welded to each other in a tool,

b) from a waste border zone (4) at least one frame-shaped hollow member (10) is formed and welded in the same manner as the container,

characterised in that in one and the same tool, from a tubular member or two regions thereof, several containers (3) arranged one beside the other are produced simultaneously and that the frame formed from the hollow member or several hollow members (10) surrounds the block formed from the containers (3).

2. Method according to Claim 1, characterised in that the hollow members (10) are formed with different geometric shapes and/or with a different size.

3. Method according to Claim 1 or 2, characterised in that containers (3) arranged one beside the other are constructed in the shape of a bottle with a neck and/or head part which is tapered with respect to their body and the region existing between two adjacent neck and/or head parts is formed into at least one hollow member (10).

4. Method according to one of Claims 1 to 3, characterised in that the forming of each hollow member (10) provided and the welding of the two sections of initial material forming it takes place simultaneously with the forming or the welding of the container (3) or the containers (3).

5. Method according to one of Claims 1 to 4, characterised in that after the welding of its two halves, each container (3) produced is filled and closed in a second sealing operation.


**Revendications**

1. Procédé pour fabriquer des récipients creux en matière plastique consistant

a) à former, pour chaque récipient (3), dans un outil approprié, deux moitiés de récipient et à les souder l'une à l'autre;

b) à former et à souder, dans une zone perdue ou de "chute" (4), au moins, un corps creux en forme de cadre (10) de la même manière qu'est formé et soudé le récipient,

caractérisé en ce que l'on produit en même temps dans un seul et même outil, à partir d'un tube ou d'un "boudin" ou dans deux régions de celui-ci, un certain nombre de récipients (3) disposés côte à côte et en ce que le cadre formé par le ou par plusieurs corps creux (10) entoure le bloc formé par les récipients (3).

2. Procédé selon la revendication 1, caractérisé en ce que les corps creux (10) présentent des formes géométriques et/ou des dimensions différentes.

3. Procédé selon la revendication 1 ou 2, caractérisé en ce qu'un certain nombre de récipients juxtaposés (3), présentent la forme de flacons, comportant un col et/ou une tête moins étendue que le corps et en ce que la région comprise entre deux parties en forme de col et/ou de tête est formée en un corps creux (10).

4. Procédé selon l'une quelconque des revendications 1 à 3, caractérisé en ce que l'on opère la mise en forme des corps creux (10) prévus, et le soudage des deux sections de la matière première les constituant en même temps que l'on forme et/ou que l'on soude le ou les récipients (3).

5. Procédé selon l'une quelconque des revendications 1 à 4, caractérisé en ce que, après le soudage des deux moitiés de chacun des récipients (3), on procède à son remplissage, puis on le ferme au corps d'une seconde opération de soudage.

Fig.1

# Fig.2

# Fig.4

EP 0 359 971 B1

# Fig.3

# Fig.5

EP 0 359 971 B1